(19) Europäisches Patentamt
European Patent Office
Office européen des brevets

(11) **EP 3 630 529 B1**

(12) **FASCICULE DE BREVET EUROPEEN**

(45) Date de publication et mention de la délivrance du brevet:
**01.03.2023 Bulletin 2023/09**

(21) Numéro de dépôt: **18717939.5**

(22) Date de dépôt: **19.04.2018**

(51) Classification Internationale des Brevets (IPC):
*B60L 53/00* (2019.01)   *B60L 58/12* (2019.01)
*B62M 6/45* (2010.01)   *B60W 50/00* (2006.01)
*B60W 10/08* (2006.01)   *B60W 10/26* (2006.01)

(52) Classification Coopérative des Brevets (CPC):
**B60L 53/00; B60L 58/12;** B60L 2200/12;
B60L 2240/62; B60L 2240/642; B60L 2260/52;
B60L 2260/54; B62M 6/45; Y02T 90/14

(86) Numéro de dépôt international:
**PCT/EP2018/059982**

(87) Numéro de publication internationale:
**WO 2018/219552 (06.12.2018 Gazette 2018/49)**

(54) **DISPOSITIF DE GESTION D'UN ENSEMBLE DE PROPULSION ÉLECTRIQUE D'UN VÉHICULE**

STEUERUNGSVORRICHTUNG FÜR EINE ELEKTRISCHE ANTRIEBSANORDNUNG IN EINEM FAHRZEUG

CONTROL APPARATUS FOR AN ELECTRIC PROPULSION ASSEMBLY OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.05.2017 FR 1754791**

(43) Date de publication de la demande:
**08.04.2020 Bulletin 2020/15**

(73) Titulaire: **Electricité de France**
**75008 Paris (FR)**

(72) Inventeur: **LUCIDARME, Thierry**
**78180 Chevreuse (FR)**

(74) Mandataire: **Plasseraud IP**
**66, rue de la Chaussée d'Antin**
**75440 Paris Cedex 09 (FR)**

(56) Documents cités:
WO-A1-2012/172227   US-A1- 2008 262 668
US-A1- 2015 158 397   US-A1- 2016 167 641
US-A1- 2016 243 958

**Description**

L'invention se rapporte au domaine de la gestion des ensembles de propulsion électrique de véhicule via lesquels la propulsion du véhicule correspondant est assurée au moins en partie.

L'invention trouve notamment une application privilégiée dans le domaine de la propulsion de vélos disposant d'un tel ensemble de propulsion, bien qu'elle n'y soit pas limitée et puisse notamment être mise en oeuvre dans le contexte d'un véhicule autre notamment automobile.

Dans le domaine des véhicules propulsés au moins en partie électriquement, il est souhaitable de prévenir les situations dans lesquelles l'utilisateur emploie le dispositif de stockage d'énergie électrique que comprend l'ensemble de propulsion électrique de son véhicule de sorte que celui-ci se retrouve déchargé alors que le véhicule se trouve à distance d'un point de recharge.

Par exemple, la principale approche relative à ces considérations et visant à résoudre ce problème, notamment dans le domaine automobile, vise à informer l'utilisateur de l'autonomie restante de son véhicule, de sorte que celui-ci puisse prendre des dispositions pour parvenir à un point de recharge sans épuiser ses batteries.

Cette approche n'est pas entièrement satisfaisante, notamment dans la mesure où cela impose à l'utilisateur d'effectuer un suivi régulier de l'autonomie de son ensemble de propulsion et à ajuster son comportement en conséquence. Cette manière de procéder tend par ailleurs à détourner l'utilisateur du pilotage effectif du véhicule en lui imposant de porter son attention sur autre chose que la route qu'il emprunte.

La demande de brevet dont le numéro de publication internationale est WO 2012/172227 A1 décrit un dispositif de gestion adapté pour la gestion d'un ensemble de propulsion électrique d'un véhicule. Néanmoins, ce document propose seulement un procédé d'estimation d'énergie, et ne garantit pas que le véhicule bénéficie d'une contribution en énergie électrique sur l'ensemble d'un trajet.

Aussi, l'invention vise à améliorer la situation.

A cet effet, l'invention concerne un dispositif de gestion adapté pour la gestion d'un ensemble de propulsion électrique d'un véhicule, l'ensemble de propulsion électrique comprenant un dispositif de stockage d'énergie électrique et un moteur adapté pour propulser en tout ou partie ledit véhicule à partir d'énergie électrique stockée dans le dispositif de stockage d'énergie électrique, le dispositif de gestion comprenant :

- une interface de communication adaptée pour la réception d'un profil d'élévation d'un trajet prédéterminé que le véhicule est destiné à emprunter,
- un module de détermination configuré pour diviser le trajet (T) en segments (Si) à partir du profil d'élévation, et configuré pour, en fonction dudit profil d'élévation, déterminer, pour chaque segment dudit trajet, une puissance électrique maximale que le dispositif de stockage d'énergie électrique est configuré pour fournir au moteur sur le segment correspondant, et

le dispositif de gestion étant en outre configuré pour interagir avec l'ensemble de propulsion électrique de sorte que, pour chaque segment du trajet, la puissance électrique effectivement fournie par le dispositif de stockage d'énergie électrique au moteur soit inférieure à la puissance électrique maximale correspondante,

dans lequel, pour déterminer la puissance électrique maximale d'un ou plusieurs segments dudit trajet, le module de détermination est configuré pour :

- - déterminer, pour chacun des segments obtenus, et à partir du profil d'élévation, une nature du segment parmi un segment montant, un segment descendant, un segment plat,
- - définir pour le trajet un budget énergétique choisi en fonction du dispositif de stockage d'énergie électrique, et pour chaque segment une portion du budget énergétique,
- - tant que la valeur d'une combinaison de termes respectivement associés à l'un des segments et correspondant chacun à un produit entre la portion du budget énergétique du segment et un facteur choisi en fonction de la nature du segment associé est supérieure au budget énergétique, recalculer la valeur de ladite combinaison pour chacune d'une ou plusieurs itérations entre chacune desquelles la portion du budget énergétique de chaque segment est réduite d'une valeur prédéterminée par rapport à l'itération précédente, et ce jusqu'à ce que la valeur de la combinaison soit inférieure ou égale au budget énergétique, et

- déterminer la puissance électrique maximale d'au moins un segment à partir du produit de la portion du budget énergétique et du facteur choisi pour le segment ayant fourni la valeur de la combinaison inférieure ou égale au budget énergétique.

Selon un aspect de l'invention, pour un segment donné, la puissance électrique maximale associée est représentative d'une énergie électrique disponible pour le segment, le dispositif de gestion étant configuré pour interagir avec l'ensemble de propulsion électrique de sorte que l'énergie électrique effectivement fournie au moteur sur un segment par le dispositif de stockage d'énergie électrique soit supérieure ou égale à une fraction prédéterminée de l'énergie électrique disponible pour le segment.

Selon un aspect de l'invention, le module de détermination est configuré pour déterminer la puissance électrique maximale d'au moins un segment à partir du rapport entre d'une part une énergie électrique correspondant au produit de la portion du budget énergétique et du facteur choisi pour le segment fournissant la valeur de la combinaison inférieure ou égale au budget énergétique, et d'autre part, d'une estimation d'un temps de parcours de tout ou partie du segment correspondant par le véhicule.

Selon un aspect de l'invention, le module de détermination est configuré pour déterminer l'estimation à partir d'au moins une information de vitesse du véhicule fournie par un module de positionnement que comprend le dispositif de gestion ou avec lequel le dispositif de gestion est configuré pour communiquer via l'interface de communication.

Selon un aspect de l'invention, le module de détermination est configuré pour choisir le facteur d'un segment montant ou descendant parmi au moins deux valeurs distinctes correspondant à des niveaux de dénivelé respectifs différents.

Selon un aspect de l'invention, la nature d'un segment est déterminée en fonction de la différence entre l'altitude d'un point de départ du segment et l'altitude d'un point d'arrivée du segment.

Selon un aspect de l'invention, le module de détermination est configuré pour diviser le trajet en segments ayant des profils d'élévation respectifs monotones.

Selon un aspect de l'invention, les portions du budget énergétique respectivement associées aux segments sont identiques entre les segments.

Selon un aspect de l'invention, la portion du budget énergétique associée à un segment est déterminée à partir d'une longueur du segment rapportée à une longueur du trajet.

Selon un aspect de l'invention, le dispositif comprend en outre une mémoire configurée pour stocker pour ledit trajet les puissances électriques maximales déterminées par le module de détermination, le module de détermination étant configuré pour réutiliser tout ou partie des puissances électriques maximales contenues dans la mémoire pour un ou des segments dudit trajet pour un parcours ultérieur dudit trajet par le véhicule.

Selon un aspect de l'invention, ledit dispositif de gestion est intégré à un équipement électronique portable tel qu'un téléphone intelligent.

L'invention concerne en outre un procédé de gestion d'un ensemble de propulsion électrique d'un véhicule, l'ensemble de propulsion électrique comprenant un dispositif de stockage d'énergie électrique et un moteur adapté pour propulser en tout ou partie ledit véhicule à partir d'énergie électrique stockée dans le dispositif de stockage d'énergie électrique, le procédé étant mis en oeuvre par des moyens informatiques et comprenant :

- recevoir un profil d'élévation d'un trajet prédéterminé que le véhicule est destiné à emprunter,

- en fonction dudit profil d'élévation, déterminer, pour chacun d'un ou plusieurs points dudit trajet, une puissance électrique maximale que le dispositif de stockage d'énergie électrique est configuré pour fournir au moteur au point associé, et

interagir avec l'ensemble de propulsion électrique de sorte que, pour chaque point du trajet pour lequel ladite puissance électrique maximale est déterminée, la puissance électrique effectivement fournie par le dispositif de stockage d'énergie électrique au moteur soit inférieure à la puissance électrique maximale correspondante,

dans lequel, pour déterminer la puissance électrique maximale d'un ou plusieurs segments dudit trajet, le procédé comprend en outre :

- - déterminer, pour chacun des segments obtenus, et à partir du profil d'élévation, une nature du segment parmi un segment montant, un segment descendant, un segment plat,
- - définir pour le trajet un budget énergétique choisi en fonction du dispositif de stockage d'énergie électrique, et pour chaque segment une portion du budget énergétique,
- - tant que la valeur d'une combinaison de termes respectivement associés à l'un des segments et correspondant chacun à un produit entre la portion du budget énergétique du segment et un facteur choisi en fonction de la nature du segment associé est supérieure au budget énergétique, recalculer la valeur de ladite combinaison pour chacune d'une ou plusieurs itérations entre chacune desquelles la portion du budget énergétique de chaque segment est réduite d'une valeur prédéterminée par rapport à l'itération précédente, et ce jusqu'à ce que la valeur de la combinaison soit inférieure ou égale au budget énergétique, et
- - déterminer la puissance électrique maximale d'au moins un segment à partir du produit de la portion du budget énergétique et du facteur choisi pour le segment ayant fourni la valeur de la combinaison inférieure ou égale au budget énergétique.

L'invention concerne en outre un programme informatique comprenant des instructions pour la mise en oeuvre du procédé tel que défini ci-dessus, lorsque ce programme est exécuté par un processeur.

L'invention sera mieux comprise à la lecture de la description détaillée qui va suivre, donnée uniquement à titre d'exemple et faite en référence aux Figures annexées, sur lesquelles :

- La Figure 1 illustre un véhicule à propulsion au moins en partie électrique et un dispositif de gestion selon l'invention ;
- La Figure 2 illustre le dispositif de gestion selon l'invention ;
- La Figure 3 illustre un profil d'élévation ; et
- La Figure 4 illustre un procédé de gestion selon l'invention.

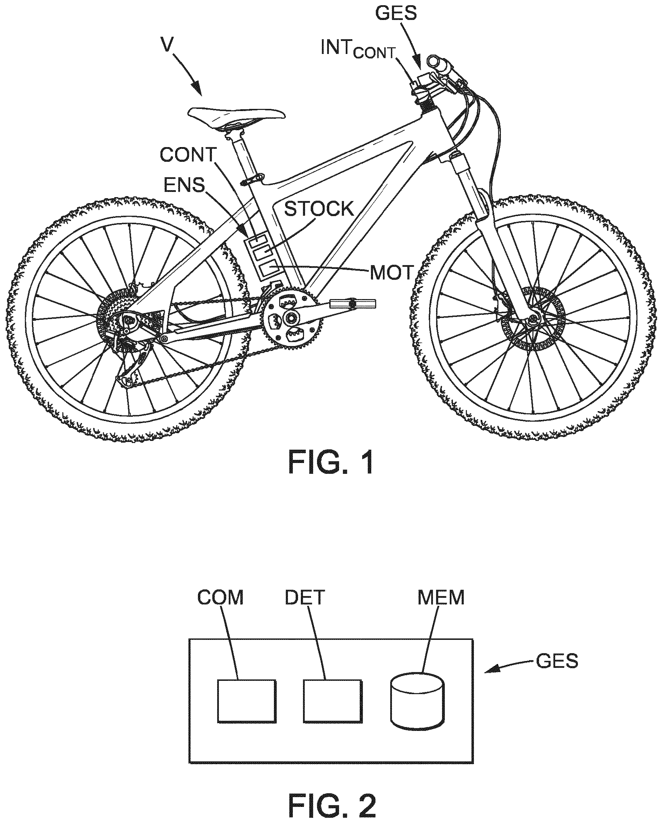

La Figure 1 illustre un véhicule V à propulsion électrique au moins en partie électrique et un dispositif de gestion GES selon l'invention, ci-après dispositif GES.

Dans ce qui suit, le véhicule V est illustré de manière non limitative dans une configuration dans laquelle il s'agit d'un vélo. Alternativement, il s'agit d'un véhicule quelconque. Par exemple, dans une configuration, il s'agit d'une voiture électrique.

Le véhicule V, en conséquence vélo V dans ce qui suit, comprend une ou plusieurs roues destinées à être mises en mouvement par un effort mécanique généré par un utilisateur, typiquement imprimé aux roues par l'intermédiaire d'un pédalier et d'une chaîne couplée à ce dernier.

Le véhicule V comprend en outre un ensemble ENS de propulsion électrique adapté pour propulser, à partir d'énergie électrique, le véhicule V.

En pratique, le déplacement du véhicule V est causé par l'effort mécanique de l'utilisateur et/ou l'ensemble ENS.

L'ensemble ENS est agencé sur le vélo V, par exemple par fixation à une structure de celui-ci tel qu'un cadre qu'il comprend.

L'ensemble ENS comprend un dispositif de stockage STOCK configuré pour stocker de l'énergie électrique, et un moteur MOT couplé au dispositif de stockage STOCK et configuré pour être alimenté par lui en énergie électrique pour entraîner le vélo V en mouvement.

Le dispositif de stockage STOCK comprend avantageusement une batterie, telle qu'une batterie électrochimique. Par exemple, cette batterie est une batterie au plomb ou au lithium.

Le dispositif de stockage STOCK est adapté pour être rechargé en énergie électrique au moins par branchement à une source d'alimentation externe, telle qu'un réseau d'alimentation.

Avantageusement, le dispositif de stockage STOCK est également adapté pour stocker de l'énergie électrique issue du freinage du véhicule, par exemple via tout moyen connu tel qu'un dispositif de récupération d'énergie de freinage (non représenté).

Le moteur MOT est avantageusement un moteur à rotor et stator mobiles l'un par rapport à l'autre.

Avantageusement, le moteur MOT est synchrone sans balai. Ce type de moteur est connu sous l'appelle anglophone « brushless », qui signifie précisément sans balai.

Le moteur MOT est configuré pour entraîner le vélo V en propulsion, par exemple par action sur le pédalier et/ou la chaîne du vélo. Cette action est par exemple mise en oeuvre via un moyen de transmission non représenté, incluant par exemple un arbre couplé au moteur.

L'ensemble ENS comprend en outre un module de contrôle CONT adapté pour contrôler le dispositif de stockage STOCK pour la fourniture d'énergie électrique au moteur MOT de façon à réguler la propulsion fournie par l'ensemble ENS, et une interface de contrôle $INT_{CONT}$ raccordée au module de contrôle CONT pour le contrôle par l'utilisateur de l'ensemble ENS.

Le module de contrôle CONT est configuré pour commander le dispositif de stockage STOCK pour la fourniture par le dispositif de stock STOCK d'une énergie électrique régulée au moteur MOT de façon à permettre la régulation de la puissance mécanique fournie par le moteur MOT.

Par exemple, la régulation employée est une régulation en courant avec une tension fournie par le dispositif de stockage STOCK sensiblement constante. Autrement dit, le module de contrôle CONT est adapté pour faire varier le courant fourni par le dispositif de stockage STOCK au moteur MOT à tension sensiblement constante.

Alternativement ou parallèlement, le module de contrôle CONT est adapté pour réguler l'énergie électrique fournie par le dispositif STOCK en faisant varier la tension fournie par lui au moteur MOT.

Le module de contrôle CONT est par exemple de facture connue.

Il comprend par exemple un ou plusieurs composants électroniques discrets. Alternativement, il comprend une carte électronique adaptée pour mettre en oeuvre les fonctions du module de contrôle CONT.

L'interface de contrôle $INT_{CONT}$ est configurée pour la saisie par l'utilisateur de commandes pour la définition du comportement de l'ensemble ENS.

Par exemple, cette interface est adaptée pour la saisie d'au moins une commande de mise en marche et une commande de mise à l'arrêt de l'ensemble.

Avantageusement, elle est également adaptée pour la saisie d'une commande de régulation de la force de propulsion générée par l'ensemble ENS.

Par exemple, cette commande est représentative de la sélection par l'utilisateur d'un niveau de propulsion parmi plusieurs niveaux possibles. Ces niveaux sont par exemple discrets.

A cet effet, l'interface de contrôle $INT_{CONTR}$ comprend par exemple une ou plusieurs touches associées à une ou plusieurs commandes possibles.

Optionnellement, l'interface de contrôle $INT_{CONTR}$ comprend un affichage, optionnellement couplé aux touches pour la définition d'une interface tactile.

On remarque que le module de contrôle CONT, le moteur MOT et le dispositif de stockage STOCK sont par exemple agencés au sein d'un boîtier, et l'interface de contrôle $INT_{CONT}$ est à distance de ce boîtier. Cette interface se trouve par exemple au niveau d'un guidon du vélo.

Toutefois, cette configuration est illustrative. Par exemple, le moteur MOT, le module de contrôle CONT et le dispositif de stockage STOCK peuvent être déportés les uns des autres. Par exemple encore, le module de stockage STOCK, qui est susceptible d'occuper un volume relativement important, est déporté du moteur MOT et du module de contrôle CONT. Le module de contrôle est lui avantageusement adjacent au moteur. Alternativement, il déporté par rapport au moteur.

En référence à la Figure 2, le dispositif GES selon l'invention est configuré pour interagir avec l'ensemble ENS pour la régulation de la propulsion fournie par l'ensemble ENS.

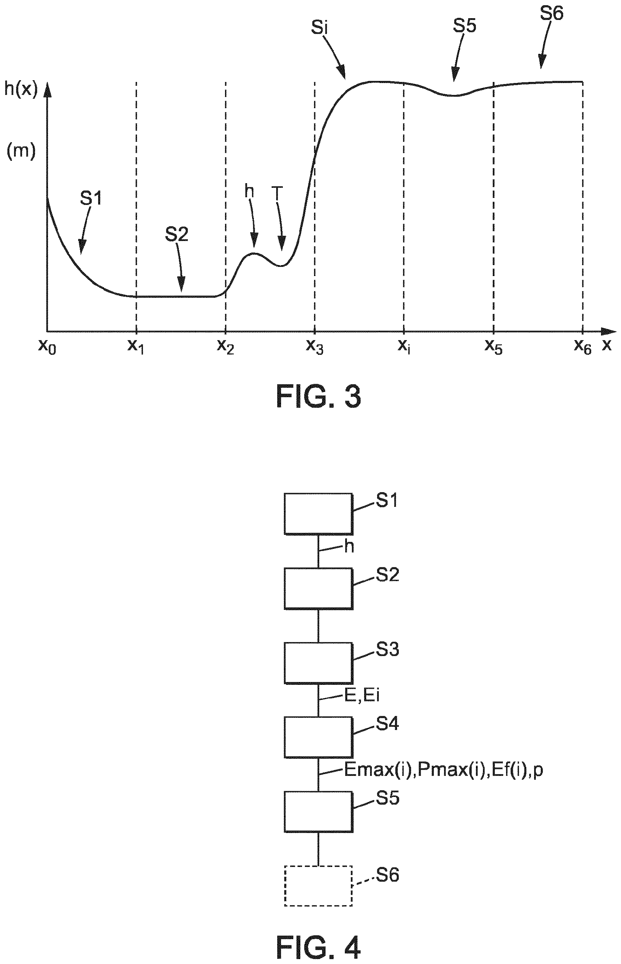

Plus spécifiquement, le dispositif GES est configuré pour, pour chacun d'un ou plusieurs points respectifs d'un trajet T (Figure 3), déterminer et fournir à l'ensemble ENS une puissance électrique maximale définissant un maximum de puissance électrique que le dispositif de stockage STOCK fournit au moteur MOT lors du parcours du point considéré du trajet T.

Avantageusement, et comme décrit ci-après, chaque puissance électrique maximale est définie pour un segment Si (Figure 3) formé d'une pluralité de tels points. Cette puissance est constante sur un segment donné, ou bien est variable.

Avantageusement, le dispositif GES est en outre configuré pour interagir avec l'ensemble ENS de sorte que la puissance électrique effectivement fournie par le dispositif de stockage STOCK au moteur MOT lors du parcours du segment soit supérieure ou égale à une fraction prédéterminée de la puissance électrique maximale associée à ce segment.

Le détail de ces fonctionnalités est donné ci-après.

En Figure 1, le dispositif de gestion de gestion GES est illustré comme étant à distance de l'ensemble ENS. Toutefois, alternativement, le module de gestion GES est logé dans un boîtier comprenant un ou plusieurs des éléments de l'ensemble ENS, voire tous les éléments de l'ensemble ENS.

Par exemple, le dispositif de gestion GES peut être intégré à l'interface de contrôle $INT_{CONT}$, ou encore à un boîtier comprenant le module de contrôle CONT, le dispositif de stockage STOCK et/ou le moteur MOT.

On remarque qu'optionnellement, c'est l'interface de contrôle $INT_{CONT}$ qui peut être intégrée au dispositif de gestion GES.

De nouveau en référence à la Figure 2, le dispositif de gestion GES comprend une interface de communication COM, un module de détermination DET et une mémoire MEM.

L'interface de communication COM est configurée pour permettre les communications du dispositif de gestion GES au moins pour la réception par le dispositif de gestion GES d'un profil d'élévation h du trajet T.

Le profil d'élévation h est illustré en Figure 3, et est représentatif de la variation de l'altitude des différents points du trajet T.

Le profil d'élévation h correspond avantageusement à une coupe altimétrique du trajet.

Le profil h représente les différents points du trajet T, les abscisses du profil d'élévation, qui sont avantageusement des abscisses curvilignes, représentent la distance séparant le point d'abscisse considéré du début du trajet T, et les ordonnées l'altitude de ces différents points.

Optionnellement, notamment en fonction de la distribution des éléments du dispositif GES et de l'ensemble ENS sur le vélo V, l'interface de communication COM est prévue pour la communication du dispositif GES et de l'ensemble ENS.

L'interface de communication COM est adaptée pour des communications selon une ou plusieurs technologies de communication connues, avantageusement sans fil. Par exemple, elle est adaptée pour des communications de type Bluetooth, Wi-Fi, radiofréquences, etc. Dans certaines réalisations, cette interface est adaptée pour les communications du dispositif GES avec un équipement électronique, tel qu'un téléphone portable intelligent.

La mémoire MEM est configurée pour stocker un ou des programmes dont l'exécution par le module de détermination permet le fonctionnement du dispositif GES.

La mémoire MEM est en outre avantageusement configurée pour stocker le profil d'élévation h, ainsi que les données employées dans le traitement (décrit ci-après) effectué pour la détermination des puissances électriques maximales et à l'issue de celui-ci. Avantageusement, elle est configurée pour stocker les puissances maximales déterminées pour un trajet T donné, le module de détermination DET étant configuré pour réemployer ces données lors du parcours ultérieur par le véhicule de ce trajet.

Avantageusement, la mémoire MEM contient également des données de configuration employées lors du traitement et définissant des modalités du traitement. Ces données de configuration sont par exemple modifiables par l'utilisateur, par exemple via une interface homme-machine du dispositif de gestion GES (non représentée), via l'interface de contrôle $INT_{CONT}$ ou bien via l'interface de communication COM.

Le module de détermination DET forme un module de traitement du dispositif de gestion GES.

Dans le contexte de l'invention, il forme plus spécifiquement un moyen de traitement informatique mis en oeuvre pour la gestion de l'ensemble ENS au sens de l'invention.

Avantageusement, le module de détermination DET comprend un processeur, un microcontrôleur ou un circuit intégré programmable. Par exemple, un tel circuit intégré programmable inclut ou est formé par un réseau de portes programmables connus sous l'acronyme anglophone FPGA (pour « Field Programmable Gate Array ») ou autre.

Le module de détermination DET est configuré pour déterminer les puissances électriques maximales décrites ci-dessus. Cette détermination est détaillée ci-dessous dans le cadre du procédé de gestion selon l'invention.

Un procédé de gestion selon l'invention va maintenant être décrit en référence aux Figures, notamment à la Figure 4.

Lors d'une première étape S1, le dispositif de gestion GES reçoit, via l'interface de communication COM, le profil d'élévation h du trajet T que le vélo est destiné à parcourir.

Dans une réalisation, le profil d'élévation h est fourni par un équipement électronique portable, par exemple appartenant à l'utilisateur du vélo V. Cet équipement correspond par exemple à un téléphone intelligent, une tablette intelligente, ou un ordinateur personnel.

De manière connue, il existe des programmes prévus pour générer de tels profils d'élévation à partir de données topographiques au sein desquelles le trajet T a été défini, et adaptés pour être exécutés sur ce type d'équipements électroniques.

Dans une autre réalisation, le profil d'élévation est fourni par un réseau de communication tel qu'un réseau de données auquel le dispositif de gestion GES a accès via l'interface de communication COM.

On remarque que cette réception est avantageusement déclenchée par l'intermédiaire d'une requête issue de l'utilisateur, par exemple saisie via le dispositif GES ou bien l'équipement électronique portable séparé ci-dessus.

Lors d'une deuxième étape S2, le module de détermination DET traite le profil d'élévation h.

Plus spécifiquement, le module de détermination DET divise le trajet en une pluralité de segments Si. Ces segments sont consécutifs et couvrent conjointement l'intégralité du trajet T.

Dans une réalisation, cette division est opérée de façon à obtenir des segments ayant une taille constante.

Pour ce faire, par exemple, l'abscisse du point de fin du trajet est divisée par un nombre choisi correspondant au nombre N de segments du trajet T. Chaque segment couvre une plage d'abscisses correspondant au résultat obtenu, le premier segment partant du point de départ du trajet.

La valeur de N et/ou sa valeur maximale sont par exemple prédéterminées. Ces valeurs sont par exemple choisies en fonction de la puissance de calcul du dispositif de gestion GES.

Avantageusement, N est supérieur ou égal à 2. Avantageusement encore, N est supérieur ou égal à 5. En Figure 3, N est pris égal à 6.

Dans une autre réalisation, le trajet T est divisé en segments de sorte que les segments ont un dénivelé monotone. Autrement dit, au sein d'un segment, le trajet T monte et/ou est plat, ou descend et/ou est plat. Dans cette configuration, c'est la configuration du trajet T qui définit le nombre N.

Pour cette division du trajet en segments monotones, par exemple, le module de détermination DET emploie une ou plusieurs méthodes d'étude d'extrémums connues pour définir les débuts et fins des segments.

Par exemple, dans le cadre de cette méthode, le module de détermination analyse les dérivées premières et secondes du profil d'élévation en tout point de celui-ci.

En outre, le module de détermination DET détermine la nature de chaque segment Si obtenu parmi un segment montant, un segment descendant, un segment plat.

Par exemple, pour ce faire, pour chaque segment, le module de détermination DET effectue la différence entre l'altitude du trajet de la fin du segment, et l'altitude du début du segment du trajet.

Si le résultat est positif, le segment est considéré montant. Si le résultat est négatif, le segment est considéré descendant. Si le résultat est nul, le segment est considéré plat.

Lors d'une étape S3, on définit un budget énergétique E pour le trajet. Ce budget est choisi en fonction du dispositif de stockage STOCK.

Par exemple, il est défini en tant que fraction de l'énergie électrique couramment stockée dans le dispositif de stockage. Avantageusement, cette fraction est prise égale à 100%.

Alternativement, le budget E est défini en tant que fraction de l'énergie électrique maximale que peut contenir le dispositif de stockage STOCK. Avantageusement, cette fraction est prise égale à 100%.

On remarque que ces définitions reviennent à la même chose lorsque le dispositif de stockage STOCK est à son taux de charge maximal.

Dit autrement, le budget E est construit pour représenter une quantité d'énergie électrique exprimée en tant que fraction d'une quantité d'énergie électrique de référence du dispositif de stockage STOCK.

La quantité d'énergie en question est connue, par exemple via la spécification du dispositif de stockage STOCK.

Cette définition est mise en oeuvre par le dispositif de détermination DET, par exemple sur la base des données de configuration.

En outre, lors de cette étape, on attribue à chaque segment Si une portion respective du budget énergétique E, notée E(i) pour le segment Si.

Dans une réalisation, cette portion E(i) est prise identique pour chaque segment. Ceci est avantageusement le cas lorsque les segments sont de taille constante.

La portion d'un segment est par exemple égale à E/N, où N est le nombre de segments Si du trajet T.

Dans une autre réalisation, la portion E(i) d'un segment Si est déterminée en fonction d'une longueur du segment Si rapportée à une longueur du trajet T. Ceci est avantageusement le cas pour des segments au dénivelé monotone.

Avantageusement, la portion E(i) est prise égale à $E(i) = \frac{\Delta_i}{\Delta} * E$ , avec $\Delta_i$= $x_i$-$x_{i-1}$ et $\Delta$=$x_n$-$x_0$, où $x_0$, $x_{i-1}$, $x_i$ et $x_n$ sont les abscisses respectives du point de départ du trajet T (et du premier segment S1), du point de départ du segment Si, du point d'arrivée du segment Si, et du point d'arrivée du trajet T (et du segment SN) au sein du profil d'élévation h.

Lors d'une étape S4, via le dispositif de détermination DET, on procède par itération pour déterminer les puissances électriques maximales des différents segments en considérant la valeur d'une combinaison de termes respectivement associés à l'un des segments et correspondant chacun à un produit entre la portion du budget énergétique E(i) et un facteur $K_i$ choisi en fonction de la nature du segment associé. Chaque itération donne lieu à la détermination de la valeur de cette combinaison, la portion du budget énergétique allouée aux segments d'une itération donnée étant réduite d'une valeur prédéterminée par rapport à l'itération précédente. Les itérations sont menées jusqu'à ce qu'à obtenir une combinaison dont la valeur est inférieure ou égale au budget E.

La réduction de la valeur appliquée à la portion du budget du segment Si d'une itération à l'autre est notée ΔE(i).

Avantageusement, ΔE(i) est identique pour toutes les itérations.

Dans certaines réalisations, avantageusement celles dans lesquelles les segments sont de taille constante, ΔE(i) est pris identique pour les différents segments, et vaut une valeur choisie notée ΔE.

Alternativement, dans certaines réalisations, par exemple celles à segments monotones, les différents ΔE(i) sont *a priori* différents d'un segment à l'autre.

Avantageusement, dans cette configuration, ΔE(i) est pris égal à $\frac{\Delta_i}{\Delta} * \Delta E$ , où ΔE est prédéterminé.

Quelle que soit la configuration envisagée, ΔE est par exemple pris égal à une ou quelques unités du budget E. Par exemple, pour un budget E de 100, ΔE est pris égal à 1, 2 ou 3. On remarque que ΔE n'est pas nécessairement entier, bien que cela soit préféré.

La combinaison employée est avantageusement une combinaison linéaire.

Autrement dit, elle se présente sous la forme $\sum_{i=1}^{n} K_i.Ep(i)$ .

Les facteurs $K_i$ sont préférentiellement positifs.

Pour les segments montants et descendants, les facteurs Ki sont avantageusement choisis parmi au moins deux valeurs possibles correspondant à des niveaux de dénivelé différents.

Pour un segment montant, Ki est pris supérieur à 1 et d'autant plus grand que le dénivelé du segment est fort. Pour un segment descendant, Ki est avantageusement inférieur à 1 et pris d'autant plus proche de zéro que le dénivelé du segment est fort.

Par exemple, pour un segment montant, les valeurs possibles sont 2 et 3. Pour un segment descendant, par exemple, elles sont égales à 1/2 et 1/3.

Par exemple, chaque valeur possible pour un facteur est associée à une plage de dénivelés, et l'appartenance du dénivelé d'un segment à l'une de ces plages est déterminée par le module de détermination pour la détermination du facteur correspondant.

On remarque que pour que l'itération initiale ne fournisse pas directement une valeur de combinaison inférieure à E, il est préférable de prendre les valeurs possibles de Ki pour les segments montants suffisamment éloignées de 1. En outre, l'invention est particulièrement adaptée aux trajets présentant une proportion de segments montants élevée.

Avantageusement, les coefficients des segments montants sont choisis parmi des valeurs supérieures ou égales à 2.

Les valeurs possibles des facteurs font par exemple partie des données de configuration. On remarque que les valeurs possibles sont avantageusement ajustables par l'utilisateur, par exemple via l'interface homme-machine du module de gestion. Ainsi, il peut ajuster le degré d'assistance fourni par l'ensemble ENS sur les segments montants et descendants.

On remarque que si lors d'une itération, la portion du budget allouée à un segment devient négative du fait de son décrément par rapport à l'itération précédente, on considère qu'elle a une valeur nulle pour la détermination de la valeur de la combinaison.

Une fois la combinaison fournissant une valeur inférieure ou égale à E obtenue, pour chaque segment, on détermine la puissance électrique maximale associée à partir du produit de la portion du budget énergétique E(i) et du facteur Ki choisi pour le segment et ayant fourni la valeur de la combinaison inférieure ou égale au budget énergétique E.

Le produit en question représente la fraction du budget E allouée au segment considéré pour le parcours du trajet après le processus itératif.

Pour déterminer la puissance électrique maximale, le module de détermination DET détermine la quantité d'énergie électrique à laquelle cette fraction du budget E correspond à partir de la quantité d'énergie électrique correspondant au budget E. Cette quantité d'énergie électrique est connue par la définition du budget E.

La fraction en question correspond à une quantité d'énergie électrique maximale Emax(i) allouée au segment.

Le traitement est immédiat, par exemple via une opération de multiplication de la fraction en question par la quantité d'énergie correspondant au budget E.

La puissance électrique maximale Pmax(i) est ensuite déterminée à partir de la quantité Emax(i) et d'une estimation du temps de parcours de tout ou partie du segment Si correspondant.

Dans une réalisation, l'estimation est par exemple réalisée *a priori,* c'est-à-dire avant le parcours du segment par le vélo V.

Dans cette réalisation, l'estimation est par exemple réalisée à partir de la longueur du segment et d'une vitesse moyenne estimée du véhicule sur le segment.

Cette vitesse moyenne est par exemple estimée à partir de la connaissance du dénivelé du segment et de données de fonctionnement du vélo collectées, par exemple par l'ensemble ENS ou le dispositif GES lui-même, sur des parcours précédents. Ces données incluent par exemple des données temporelles représentatives du temps mis pour parcourir les segments d'un parcours différent, mais présentant une même nature, et avantageusement s'étant vu attribuer un même facteur Ki.

On remarque que l'estimation de la vitesse moyenne est mise en oeuvre selon des modalités par exemple connues.

En effectuant un rapport simple entre la longueur du segment et cette vitesse moyenne estimée, on arrive à une estimation du temps passé sur le segment entier.

Dans cette configuration, la puissance électrique maximale Pmax(i) est constante sur le segment.

Dans une autre configuration, la puissance électrique Pmax(i) est déterminée en temps réel à partir de données de positionnement.

Ces données de positionnement sont par exemple obtenues par le dispositif GES via un module de positionnement qu'il comprend.

Alternativement, elles sont fournies au dispositif GES par un dispositif auquel le dispositif GES est raccordé, tel qu'un équipement électronique portable dont dispose l'utilisateur et incluant un module de positionnement, tel qu'un téléphone intelligent. Cet équipement est avantageusement celui ayant fourni le profil h (lorsqu'obtenu ainsi).

Quelle que soit la configuration, le module de positionnement est avantageusement un module GNSS, pour « Global Navigation Satellite System », qui signifie système de navigation globale par satellite. Le module est par exemple un module GPS, pour « Global Positioning System », qui signifie système de positionnement par satellite, ou encore un module GALILEO.

Le dispositif GES associé à cet équipement forme par exemple un système de gestion selon l'invention.

Ces données incluent avantageusement la position du véhicule sur le trajet, c'est-à-dire l'abscisse du point courant sur le profil d'élévation, ainsi que la vitesse courante du vélo.

Pour la détermination de la puissance électrique maximale Pmax(i), le module de détermination DET estime le temps de parcours du reste du segment courant à partir des données de positionnement, c'est-à-dire le temps estimé que le vélo va mettre à joindre la fin du segment depuis le point courant du segment.

Pour ce faire, le module de détermination génère l'estimation à partir de la position du vélo, de la fin du segment et de sa vitesse courante, par exemple de manière connue.

Le module de détermination DET détermine alors la puissance électrique maximale courante à partir de l'énergie Emax(i) du segment, l'énergie notée Ef(i) représentative de l'énergie électrique déjà fournie par le dispositif de stockage STOCK au moteur MOT sur le segment, et l'estimation du temps de parcours du reste du segment.

Par exemple, il la détermine comme étant le rapport entre la différence entre ces énergies électriques (c'est-à-dire Emax(i) - Ef(i)) et l'estimation en question.

L'énergie Ef(i) est avantageusement enregistrée par le dispositif de gestion GES au cours du temps.

On remarque que la puissance Pmax(i) devient ainsi *a priori* variable dans le temps.

Cette détermination de la puissance électrique maximale Pmax(i) est par exemple réitérée, avantageusement à intervalles réguliers.

Lors d'une étape S5, le dispositif de gestion GES fournit à l'ensemble ENS la puissance maximale Pmax(i) pour mise en oeuvre par le module de contrôle CONT.

La puissance Pmax(i) est par exemple envoyée dès sa détermination effectuée.

Une fois reçue, la puissance Pmax(i) est mise en oeuvre sur le segment correspondant.

On remarque qu'optionnellement, la puissance Pmax(i) est reçue conjointement à des données caractérisant les conditions de sa mise en oeuvre, par exemple en termes de position au sein du parcours ou bien d'instant de mise en oeuvre.

Alternativement toutefois, la puissance Pmax(i) est mise en oeuvre dès réception.

Pour la mise en oeuvre effective de la puissance Pmax(i), le module de contrôle CONT détermine la puissance électrique effectivement fournie au moteur MOT à un instant donné sorte que cette puissance soit inférieure ou égale à la puissance Pmax(i) s'appliquant au segment courant ou à la portion courante du segment.

Comme indiqué ci-dessus, cette puissance est avantageusement déterminée à partir des informations saisies par l'utilisateur via l'interface de contrôle INT$_{CONT}$, la puissance Pmax(i) étant alors prise en compte et formant une borne supérieure pour le résultat de la détermination.

Lors d'une étape S6 optionnelle, le dispositif de gestion GES interagit avec l'ensemble ENS de sorte que l'énergie électrique effectivement fournie au moteur sur un segment par le dispositif de stockage d'énergie électrique soit supérieure ou égale à une fraction prédéterminée de l'énergie électrique allouée au segment après le processus itératif.

Autrement dit, le dispositif de gestion GES interagit avec l'ensemble ENS de sorte que l'énergie électrique effectivement dépensée par le moteur MOT pour propulser le vélo sur le segment soit supérieure à une fraction p de l'énergie maximale Emax(i) allouée à ce segment.

Cette fraction est par exemple choisie comme étant supérieure ou égale à 0,5, 0,6, 0,7 ou 0,8.

Avantageusement, cette fraction est modifiable par l'utilisateur, par exemple via l'interface homme-machine du module de gestion GES, ou bien encore via l'interface $INT_{CONT}$. Chaque valeur ci-dessus correspond par exemple à un réglage possible accessible à l'utilisateur.

Avantageusement, dans cette configuration, on détermine, par exemple via le module de détermination DET ou bien l'ensemble ENS, une puissance électrique minimale correspondant au produit p*Pmax(i).

Le module de contrôle CONT détermine alors la puissance électrique effectivement fournie par le dispositif de stockage STOCK en utilisant cette puissance électrique minimale comme borne inférieure.

On remarque toutefois que cette puissance électrique minimale peut ne pas être employée, par exemple temporairement, en cas de détection d'une ou plusieurs conditions prédéterminées. Par exemple, la ou une telle condition porte sur la détection d'une action de freinage mise en oeuvre sur le véhicule. Cette action peut être manuelle, par exemple à l'initiative de son utilisateur, ou automatique.

Une fois que cette ou ces conditions ne sont plus détectées, la puissance minimale est de nouveau employée comme valeur minimale de la puissance électrique effectivement fournie par le dispositif de stockage.

On remarque que tout ou partie des étapes, notamment S5 et S6, peut se dérouler de manière simultanée, et/ou être réitéré dans le temps, par exemple à intervalles réguliers.

En outre, on remarque le fonctionnement de l'ensemble ENS et du dispositif de gestion GES selon le principe ci-dessus des puissances maximales peut être implémenté sous la forme d'un mode de fonctionnement spécifique de l'ensemble ENS et du dispositif de gestion GES. Ce mode de fonctionnement est sélectivement activable, et est avantageusement choisi parmi une pluralité de modes de fonctionnement possibles.

Par exemple, dans l'un de ces modes de fonctionnement, le module de contrôle CONT ne tient pas compte de la puissance maximale Pmax(i), ou bien le module de détermination DET ne détermine pas la puissance Pmax(i).

L'invention présente plusieurs avantages.

En effet, elle permet de s'assurer d'une décharge du dispositif de stockage d'une manière compatible avec une utilisation prolongée de l'ensemble ENS. En outre, ceci est obtenu sans nécessité d'assurer un suivi de l'état de charge du dispositif de stockage par l'utilisateur.

En outre, elle permet de prévenir le sous-emploi du dispositif de stockage, ce qui n'est pas souhaitable, notamment en cas trajet à forte tendance à la montée.

On remarque que la description peut être immédiatement transposée à une configuration dans laquelle l'invention se rapporte à un véhicule autre qu'un vélo, par exemple un véhicule automobile.

Dans cette configuration, les éléments placés au voisinage du guidon du vélo sont par exemple au niveau d'un tableau de bord du véhicule ou d'un ordinateur de bord qu'il comprend. En outre, l'ensemble ENS, en particulier le moteur, assure une propulsion du véhicule par exemple par action par exemple sur un essieu du véhicule, et non sur un pédalier de celui-ci.

En outre, la propulsion du véhicule est avantageusement obtenue en tout ou partie à partir d'un moteur de type autre qu'électrique, tel que par exemple thermique.

Par ailleurs, dans le contexte de l'invention, les différents éléments décrits ci-dessus, à savoir le dispositif de gestion GES, l'ensemble ENS, et leurs composants respectifs, définissent des fonctionnalités qui peuvent être distribuées sur le véhicule d'une quelconque manière.

De façon générale, quelle que soit la réalisation considérée, ils sont adaptés pour communiquer les uns avec les autres via des moyens de communication tels que par exemple l'interface de communication COM. Par exemple, ils sont raccordés entre eux au moyen d'un ou plusieurs bus de communication de type filaire, et/ou à un réseau sans fil local. Ce réseau repose par exemple sur une technologie WiFi, Bluetooth, ou encore une technologie de type PAN, pour « Personal Area Network », qui signifie réseau personnel.

Par ailleurs, dans la description ci-dessus, le dispositif de gestion GES est décrit comme correspondant à un dispositif physique à part entière.

Toutefois, alternativement, le dispositif de gestion GES est intégré à un autre dispositif électronique tel qu'un téléphone portable intelligent.

Dans cette configuration, le module de détermination DET se présente par exemple sous la forme d'un module logiciel contenu dans la mémoire MEM, qui est une mémoire de ce dispositif électronique. Le module de détermination DET est alors par exemple mis en oeuvre par exécution par un composant de traitement de ce dispositif tel qu'un processeur. L'interface de communication est alors par exemple une interface de communication de ce dispositif.

Dans le cas où le véhicule est une voiture, ce dispositif électronique correspond par exemple à un ordinateur de bord.

## Revendications

1. Dispositif de gestion (GES) adapté pour la gestion d'un ensemble de propulsion électrique (ENS) d'un véhicule, l'ensemble de propulsion électrique comprenant un dispositif de stockage d'énergie électrique (STOCK) et un moteur (MOT) adapté pour propulser en tout ou partie ledit véhicule à partir d'énergie électrique stockée dans le dispositif de stockage d'énergie électrique, le dispositif de gestion comprenant :

- une interface de communication (COM) adaptée pour la réception d'un profil d'élévation (h) d'un trajet (T) prédéterminé que le véhicule est destiné à emprunter,
- un module de détermination (DET) configuré pour diviser le trajet (T) en segments (Si) à partir du profil d'élévation, et configuré pour, en fonction dudit profil d'élévation, déterminer, pour chaque segment dudit trajet, une puissance électrique maximale (Pmax(i)) que le dispositif de stockage d'énergie électrique est configuré pour fournir au moteur sur le segment correspondant, chaque segment étant ainsi associé à une puissance électrique maximale, et **caractérisé en ce que**

le dispositif de gestion (GES) est en outre configuré pour interagir avec l'ensemble de propulsion électrique (ENS) de sorte que, pour chaque segment du trajet, la puissance électrique effectivement fournie par le dispositif de stockage d'énergie électrique au moteur soit inférieure à la puissance électrique maximale correspondante,

dans lequel, pour déterminer la puissance électrique maximale (Pmax(i)) d'un ou plusieurs segments dudit trajet, le module de détermination (DET) est configuré pour :

- - déterminer, pour chacun des segments obtenus, et à partir du profil d'élévation, une nature du segment parmi un segment montant, un segment descendant, un segment plat,
- - définir pour le trajet un budget énergétique (E) choisi en fonction du dispositif de stockage d'énergie électrique, et pour chaque segment une portion (E(i)) du budget énergétique,
- - tant que la valeur d'une combinaison de termes respectivement associés à l'un des segments et correspondant chacun à un produit entre la portion du budget énergétique (E(i)) du segment et un facteur (Ki) choisi en fonction de la nature du segment associé est supérieure au budget énergétique (E), recalculer la valeur de ladite combinaison pour chacune d'une ou plusieurs itérations entre chacune desquelles la portion (E(i)) du budget énergétique de chaque segment est réduite d'une valeur prédéterminée par rapport à l'itération précédente, et ce jusqu'à ce que la valeur de la combinaison soit inférieure ou égale au budget énergétique (E), et

- - déterminer la puissance électrique maximale (Pmax(i)) d'au moins un segment à partir du produit de la portion du budget énergétique (E(i)) et du facteur (Ki) choisi pour le segment ayant fourni la valeur de la combinaison inférieure ou égale au budget énergétique (E).

2. Dispositif de gestion selon la revendication 1, dans lequel, pour un segment (Si) donné, la puissance électrique maximale (Pmax(i)) associée est représentative d'une énergie électrique (Emax(i)) disponible pour le segment, le dispositif de gestion (GES) étant configuré pour interagir avec l'ensemble de propulsion électrique (ENS) de sorte que l'énergie électrique effectivement fournie au moteur sur un segment par le dispositif de stockage d'énergie électrique soit supérieure ou égale à une fraction (p) prédéterminée de l'énergie électrique (Emax(i)) disponible pour le segment.

3. Dispositif de gestion selon la revendication 1 ou 2, dans lequel le module de détermination (DET) est configuré pour déterminer la puissance électrique maximale (Pmax(i)) d'au moins un segment à partir du rapport entre d'une part une énergie électrique correspondant au produit de la portion (E(i)) du budget énergétique et du facteur (Ki) choisi pour le segment fournissant la valeur de la combinaison inférieure ou égale au budget énergétique, et d'autre part, d'une estimation d'un temps de parcours de tout ou partie du segment correspondant par le véhicule.

4. Dispositif de gestion selon la revendication 3, dans lequel le module de détermination (DET) est configuré pour déterminer l'estimation à partir d'au moins une information de vitesse du véhicule fournie par un module de positionnement que comprend le dispositif de gestion ou avec lequel le dispositif de gestion est configuré pour communiquer via l'interface de communication.

5. Dispositif de gestion selon l'une quelconque des revendications précédentes, dans lequel le module de détermination (DET) est configuré pour choisir le facteur d'un segment montant ou descendant parmi au moins deux valeurs distinctes correspondant à des niveaux de dénivelé respectifs différents.

6. Dispositif de gestion selon l'une quelconque des revendications précédentes, dans lequel la nature d'un segment est déterminée en fonction de la différence entre l'altitude d'un point de départ du segment et l'altitude d'un point d'arrivée du segment.

**7.** Dispositif de gestion selon l'une quelconque des revendications précédentes, dans lequel le module de détermination est configuré pour diviser le trajet en segments ayant des profils d'élévation respectifs monotones.

**8.** Dispositif de gestion selon l'une quelconque des revendications précédentes, dans lequel les portions (E(i)) du budget énergétique respectivement associées aux segments sont identiques entre les segments.

**9.** Dispositif de gestion selon l'une quelconque des revendications précédentes, dans lequel la portion (E(i)) du budget énergétique associée à un segment est déterminée à partir d'une longueur du segment rapportée à une longueur du trajet.

**10.** Dispositif de gestion selon l'une quelconque des revendications précédentes, comprenant en outre une mémoire (MEM) configurée pour stocker pour ledit trajet les puissances électriques maximales déterminées par le module de détermination (DET), le module de détermination étant configuré pour réutiliser tout ou partie des puissances électriques maximales contenues dans la mémoire pour un ou des segments dudit trajet pour un parcours ultérieur dudit trajet par le véhicule.

**11.** Dispositif de gestion selon l'une quelconque des revendications précédentes, dans lequel ledit dispositif de gestion est intégré à un équipement électronique portable tel qu'un téléphone intelligent.

**12.** Procédé de gestion d'un ensemble de propulsion électrique (ENS) d'un véhicule (V), l'ensemble de propulsion électrique comprenant un dispositif de stockage d'énergie électrique (STOCK) et un moteur (MOT) adapté pour propulser en tout ou partie ledit véhicule à partir d'énergie électrique stockée dans le dispositif de stockage d'énergie électrique, le procédé étant mis en oeuvre par des moyens informatiques et comprenant :

- recevoir un profil d'élévation (h) d'un trajet (T) prédéterminé que le véhicule est destiné à emprunter,
- diviser le trajet (T) en segments (Si) à partir du profil d'élévation,
- en fonction dudit profil d'élévation (h), déterminer, pour chaque segment dudit trajet, une puissance électrique maximale (Pmax(i)) que le dispositif de stockage d'énergie électrique (STOCK) est configuré pour fournir au moteur sur le segment associé, le procédé **caractérisé en ce qu'**il comprend:
- interagir avec l'ensemble de propulsion électrique (ENS) de sorte que, pour chaque segment du trajet, la puissance électrique effectivement fournie par le dispositif de stockage d'énergie électrique au moteur soit inférieure à la puissance électrique maximale correspondante, et **en ce que**:

dans lequel, pour déterminer la puissance électrique maximale (Pmax(i)) d'un ou plusieurs segments dudit trajet, le procédé comprend en outre :

- - déterminer, pour chacun des segments obtenus, et à partir du profil d'élévation, une nature du segment parmi un segment montant, un segment descendant, un segment plat,
- - définir pour le trajet un budget énergétique (E) choisi en fonction du dispositif de stockage d'énergie électrique, et pour chaque segment une portion (E(i)) du budget énergétique,
- - tant que la valeur d'une combinaison de termes respectivement associés à l'un des segments et correspondant chacun à un produit entre la portion du budget énergétique (E(i)) du segment et un facteur (Ki) choisi en fonction de la nature du segment associé est supérieure au budget énergétique (E), recalculer la valeur de ladite combinaison pour chacune d'une ou plusieurs itérations entre chacune desquelles la portion (E(i)) du budget énergétique de chaque segment est réduite d'une valeur prédéterminée par rapport à l'itération précédente, et ce jusqu'à ce que la valeur de la combinaison soit inférieure ou égale au budget énergétique (E), et
- - déterminer la puissance électrique maximale (Pmax(i)) d'au moins un segment à partir du produit de la portion du budget énergétique (E(i)) et du facteur (Ki) choisi pour le segment ayant fourni la valeur de la combinaison inférieure ou égale au budget énergétique (E).

**13.** Programme informatique comprenant des instructions pour la mise en oeuvre du procédé selon la revendication 12, lorsque ce programme est exécuté par un processeur.

**Patentansprüche**

**1.** Steuerungsvorrichtung (GES), ausgebildet für die Steuerung einer elektrischen Vortriebsvorrichtung (ENS) eines Fahrzeugs, wobei die elektrische Vortriebsvorrichtung eine Vorrichtung zum Speichern elektrischer Energie (STOCK) und einen Motor (MOT) umfasst, der dazu ausgebildet ist, das Fahrzeug ganz oder teilweise anhand von in der Vorrichtung zum Speichern elektrischer Energie gespeicherter elektrischer Energie anzutreiben, wobei die Steuerungsvorrichtung umfasst:

- eine Kommunikationsschnittstelle (COM), die für den Empfang eines Höhenprofils (h) einer vorbestimmten Strecke (T), die das Fahrzeug befahren soll, ausgebildet ist,
- ein Bestimmungsmodul (DET), das dazu konfiguriert ist, die Strecke (T) anhand des Höhenprofils in Segmente (Si) zu unterteilen, und dazu konfiguriert ist, anhand des Höhenprofils für jedes Segment der Strecke eine maximale elektrische Leistung (Pmax(i)) zu bestimmen, die die elektrische Energiespeichervorrichtung dem Motor auf dem entsprechenden Segment zuführen kann, wobei jedes Segment somit einer maximalen elektrischen Leistung zugeordnet ist, und

**dadurch gekennzeichnet, dass** die Steuerungsvorrichtung (GES) ferner dazu konfiguriert ist, mit der elektrischen Vortriebsvorrichtung (ENS) derart zu interagieren, dass für jedes Segment der Strecke die elektrische Leistung, die tatsächlich von der elektrischen Energiespeichervorrichtung an den Motor geliefert wird, geringer ist als die entsprechende maximale elektrische Leistung,

wobei zur Bestimmung der maximalen elektrischen Leistung (Pmax(i)) eines oder mehrerer Segmente der Strecke das Bestimmungsmodul (DET) so konfiguriert ist, dass es:

- für jedes der erhaltenen Segmente und aus dem Höhenprofil eine Art des Segments aus einem ansteigenden Segment, einem absteigenden Segment und einem flachen Segment bestimmt,
- für die Strecke ein Energiebudget (E) festlegt, das in Abhängigkeit von der elektrischen Energiespeichervorrichtung gewählt wird, und für jedes Segment einen Anteil des Energiebudgets (E(i)) festlegt,
- solange der Wert einer Kombination von Termen, die jeweils einem der Segmente zugeordnet sind und jeweils einem Produkt aus dem Anteil des Energiebudgets (E(i)) des Segments und einem Faktor (Ki) entsprechen, der in Abhängigkeit von der Art des zugeordneten Segments gewählt wird, größer als das Energiebudget (E) ist, den Wert der Kombination für jede von einer oder mehreren Iterationen neu berechnet, zwischen denen der Anteil des Energiebudgets (E(i)) jedes Segments im Vergleich zur vorherigen Iteration um einen vorbestimmten Wert verringert wird, und zwar solange, bis der Wert der Kombination kleiner oder gleich dem Energiebudget (E) ist, und
- die maximale elektrische Leistung (Pmax(i)) wenigstens eines Segments aus dem Produkt des Anteils des Energiebudgets (E(i)) und dem Faktor (Ki) bestimmt, der für dasjenige Segment gewählt wurde, das den Wert der Kombination geliefert hat, der kleiner oder gleich dem Energiebudget (E) ist.

**2.** Steuerungsvorrichtung nach Anspruch 1, wobei für ein gegebenes Segment (Si) die zugeordnete maximale elektrische Leistung (Pmax(i)) repräsentativ für eine elektrische Energie (Emax(i)) ist, die für das Segment verfügbar ist, wobei die Steuerungsvorrichtung (GES) dazu konfiguriert ist, mit der elektrischen Vortriebsvorrichtung (ENS) derart zu interagieren, dass die elektrische Energie, die dem Motor in einem Segment von der elektrischen Energiespeichervorrichtung effektiv zugeführt wird, größer oder gleich einem vorbestimmten Bruchteil (p) der für das Segment verfügbaren elektrischen Energie (Emax(i)) ist.

**3.** Steuerungsvorrichtung nach Anspruch 1 oder 2, wobei das Bestimmungsmodul (DET) dazu konfiguriert ist, die maximale elektrische Leistung (Pmax(i)) wenigstens eines Segments aus dem Verhältnis zwischen einerseits einer elektrischen Energie, die dem Produkt aus dem Anteil des Energiebudgets (E(i)) und dem für das Segment gewählten Faktor (Ki) entspricht, der den Wert der Kombination liefert, der kleiner oder gleich dem Energiebudget ist, zu bestimmen, und andererseits einer Schätzung einer Fahrzeit des Fahrzeugs für das gesamte oder einen Teil des entsprechenden Segments.

**4.** Steuerungsvorrichtung nach Anspruch 3, wobei das Bestimmungsmodul (DET) dazu konfiguriert ist, die Schätzung aus wenigstens einer Geschwindigkeitsinformation des Fahrzeugs zu bestimmen, die von einem Positionsmodul geliefert wird, das die Steuerungsvorrichtung umfasst oder mit dem die Steuerungsvorrichtung dazu konfiguriert ist, über die Kommunikationsschnittstelle zu kommunizieren.

**5.** Steuerungsvorrichtung nach einem der vorhergehenden Ansprüche, wobei das Bestimmungsmodul (DET) dazu konfiguriert ist, den Faktor eines ansteigenden oder absteigenden Segments aus wenigstens zwei verschiedenen Werten auszuwählen, die jeweils unterschiedlichen Denivelierungsniveaus entsprechen.

**6.** Steuerungsvorrichtung nach einem der vorhergehenden Ansprüche, wobei die Art eines Segments in Abhängigkeit von der Differenz zwischen der Höhe eines Startpunkts des Segments und der Höhe eines Endpunkts des Segments bestimmt wird.

7. Steuerungsvorrichtung nach einem der vorhergehenden Ansprüche, wobei das Bestimmungsmodul dazu ausgebildet ist, die Strecke in Segmente aufzuteilen, die jeweilige monotone Höhenprofile aufweisen.

8. Steuerungsvorrichtung nach einem der vorhergehenden Ansprüche, wobei die den Segmenten jeweils zugeordneten Anteile des Energiebudgets (E(i)) zwischen den Segmenten identisch sind.

9. Steuerungsvorrichtung nach einem der vorhergehenden Ansprüche, wobei der einem Segment zugeordnete Anteil des Energiebudgets (E(i)) aus einer Länge des Segments in Bezug auf eine Länge des Weges bestimmt wird.

10. Steuerungsvorrichtung nach einem der vorhergehenden Ansprüche, welche ferner einen Speicher (MEM) umfasst, der dazu konfiguriert ist, die von dem Bestimmungsmodul (DET) ermittelten maximalen elektrischen Leistungen für die Strecke zu speichern, wobei das Bestimmungsmodul dazu konfiguriert ist, alle oder einen Teil der maximalen elektrischen Leistungen, die in dem Speicher für ein oder mehrere Segmente der Strecke enthalten sind, für eine spätere Fahrt des Fahrzeugs auf der Strecke wiederzuverwenden.

11. Steuerungsvorrichtung nach einem der vorhergehenden Ansprüche, wobei die Steuerungsvorrichtung in ein tragbares elektronisches Gerät wie ein Smartphone eingebaut ist.

12. Verfahren zur Steuerung einer elektrischen Vortriebsvorrichtung (ENS) eines Fahrzeugs (V), wobei die elektrische Vortriebsvorrichtung eine Vorrichtung zum Speichern elektrischer Energie (STOCK) und einen Motor (MOT) umfasst, der dazu ausgebildet ist, das Fahrzeug ganz oder teilweise anhand von in der Vorrichtung zur Speicherung elektrischer Energie gespeicherter elektrischer Energie anzutreiben, wobei das Verfahren durch Computermittel implementiert wird, und Folgendes umfasst:

    - Empfangen eines Höhenprofils (h) einer vorbestimmten Strecke (T), die das Fahrzeug befahren soll,
    - Unterteilen der Strecke (T) in Segmente (Si) anhand des Höhenprofils,
    - anhand des Höhenprofils (h) Bestimmen einer maximalen elektrischen Leistung (Pmax(i)) für jedes Segment der Strecke, für die die elektrische Energiespeichervorrichtung (STOCK) ausgebildet ist, um sie dem Motor auf dem zugehörigen Segment zuzuführen, wobei das Verfahren **dadurch gekennzeichnet ist, dass** es Folgendes umfasst:
- die Interaktion mit der elektrischen Vortriebsvorrichtung (ENS) derart, dass für jedes Segment der Strecke die elektrische Leistung, die tatsächlich von der elektrischen Energiespeichervorrichtung an den Motor geliefert wird, geringer ist als die entsprechende maximale elektrische Leistung, und dass:
wobei das Verfahren zum Bestimmen der maximalen elektrischen Leistung (Pmax(i)) eines oder mehrerer Segmente der Strecke ferner umfasst:

    - anhand des Höhenprofils Bestimmen für jedes der erhaltenen Segmente einer Art des Segments aus einem ansteigenden Segment, einem absteigenden Segment und einem flachen Segment,
    - Festlegen eines Energiebudgets (E) für die Strecke, das in Abhängigkeit von der elektrischen Energiespeichervorrichtung gewählt wird, und für jedes Segment Festlegen eines Anteils des Energiebudgets (E(i)),
    - solange der Wert einer Kombination von Termen, die jeweils einem der Segmente zugeordnet sind und jeweils einem Produkt aus dem Anteil des Energiebudgets (E(i)) des Segments und einem Faktor (Ki) entsprechen, der in Abhängigkeit von der Art des zugeordneten Segments gewählt wird, größer als das Energiebudget (E) ist, Neuberechnen des Wertes der Kombination für jede von einer oder mehreren Iterationen, zwischen denen der Anteil des Energiebudgets (E(i)) jedes Segments im Vergleich zur vorherigen Iteration um einen vorbestimmten Wert reduziert wird, und zwar solange, bis der Wert der Kombination kleiner oder gleich dem Energiebudget (E) ist, und
    - Bestimmen der maximalen elektrischen Leistung (Pmax(i)) von wenigstens einem Segment anhand des Produkts des Anteils des Energiebudgets (E(i)) und des Faktors (Ki), der für das Segment gewählt wird, das den Wert der Kombination geliefert hat, der kleiner oder gleich dem Energiebudget (E) ist.

13. Computerprogramm, umfassend Anweisungen zur Durchführung des Verfahrens nach Anspruch 12, wenn dieses Programm von einem Prozessor ausgeführt wird.

**Claims**

1. Management device (GES) suitable for managing an electric propulsion assembly (ENS) of a vehicle, the electric propulsion assembly comprising an electrical energy storage device (STOCK) and a motor (MOT) suitable for propelling the vehicle entirely or partially using electrical energy stored in the electrical energy storage device, the management device comprising:

    - a communication interface (COM) suitable for receiving an elevation profile (h) of a predetermined route (T) that the vehicle is intended to take,
    - a determination module (DET) configured to divide the route into segments (Si) based on the elevation profile, and configured to determine, based on said elevation profile, for each segment of said route, a maximum electric power (Pmax(i)) that the electrical energy storage device is configured to supply to the motor at the corresponding segment, each segment being associated with a maximum electric power, and **characterized in that** the management device (GES) is further configured to interact with the electric propulsion assembly (ENS) such that, for each segment of the route, the electric power actually supplied by the electrical energy storage device to the motor is less than the corresponding maximum electric power, wherein the determination module (DET) is configured to:

        - determine, for each of the obtained segments and from the elevation profile, a type of segment among: a climbing segment, a descending segment, a flat segment,
        - define for the route an energy budget (E) chosen according to the electrical energy storage device, and define for each segment a portion (E(i)) of the energy budget,
        - as long as the value of a combination of terms respectively associated with one of the segments and each corresponding to a product of the energy budget portion (E(i)) for the segment and a factor (Ki) chosen according to the type of the associated segment is superior to the energy budget (E), recalculate the value of said combination for each of one or more iterations between each of which the energy budget portion (E(i)) for each segment is reduced by a predetermined value relative to the previous iteration, until the value of the combination is less than or equal to the energy budget (E), and
        - determine the maximum electric power (Pmax(i)) of at least one segment, based on the product of the energy budget portion (E(i)) and the factor (Ki) chosen for the segment that provided the value of the combination less than or equal to the energy budget (E).

2. Management device according to claim 1, wherein, for a given segment (Si), the associated maximum electric power (Pmax(i)) is representative of the electrical energy (Emax(i)) available for the segment, the management device (GES) being configured to interact with the electric propulsion assembly (ENS) such that the electrical energy actually supplied to the motor in a segment by the electrical energy storage device is greater than or equal to a predetermined fraction (p) of the electrical energy (Emax(i)) available for the segment.

3. Management device according to claim 1 or 2, wherein the determination module (DET) is configured to determine the maximum electric power (Pmax(i)) of at least one segment based on the ratio between: an electrical energy corresponding to the product of the energy budget portion (E(i)) and the factor (Ki) chosen for the segment providing the value of the combination less than or equal to the energy budget, and an estimate of a time needed for the vehicle to travel all or part of the corresponding segment.

4. Management device according to claim 3, wherein the determination module (DET) is configured to determine the estimate from at least one vehicle speed information item provided by a positioning module comprised in the management device or with which the management device is configured to communicate via the communication interface.

5. Management device according to any one of preceding claims, wherein the determination module (DET) is configured to select the factor for a climbing or descending segment from at least two distinct values corresponding to different respective levels of elevation changes.

6. Management device according to any one of the preceding claims, wherein the type of a segment is determined based on the difference between the altitude of a starting point of the segment and the altitude of an end point of the segment.

7. Management device according to any one of the preceding claims, wherein the determination module is configured to divide the route into segments having respective monotonic elevation profiles.

8. Management device according to any one of the preceding claims, wherein the energy budget portions (E(i)) respectively associated with the segments are identical between segments.

9.  Management device according to any one of the preceding claims, wherein the energy budget portion (E(i)) associated with a segment is determined from a length of the segment relative to a length of the route.

10. Management device according to any one of the preceding claims, further comprising a memory (MEM) configured to store for said route the maximum electric powers determined by the determination module (DET), the determination module being configured to reuse all or part of the maximum electric powers contained in the memory for one or more segments of said route for a subsequent trip by the vehicle on said route.

11. Management device according to any one of the preceding claims, wherein said management device is integrated with a portable electronic device such as a smart phone.

12. Method for managing an electric propulsion assembly (ENS) of a vehicle (V), the electric propulsion assembly comprising an electrical energy storage device (STOCK) and a motor (MOT) suitable for propelling said vehicle entirely or partially using electrical energy stored in the electrical energy storage device, the method being implemented by computer means and comprising:

    - receiving an elevation profile (h) for a predetermined route (T) that the vehicle is intended to follow,
    - dividing the route into segments (Si) based on the elevation profile, and configured
    - determining, based on said elevation profile (h), for each of one or more segments of said route, a maximum electric power (Pmax(i)) that the electrical energy storage device (STOCK) is configured to supply to the motor at the associated segment, the method being **characterized in that** it comprises:
    - interacting with the electric propulsion assembly (ENS) such that, for each point of the route for which said maximum electric power (Pmax(i)) is determined, the electric power actually supplied by the electrical energy storage device to the motor is less than the corresponding maximum electric power, and **in that**:
    wherein the determination module (DET) is configured to:

        - determine, for each of the obtained segments and from the elevation profile, a type of segment among: a climbing segment, a descending segment, a flat segment,
    - define for the route an energy budget (E) chosen according to the electrical energy storage device, and define for each segment a portion (E(i)) of the energy budget,
    - as long as the value of a combination of terms respectively associated with one of the segments and each corresponding to a product of the energy budget portion (E(i)) for the segment and a factor (Ki) chosen according to the type of the associated segment is superior to the energy budget (E), recalculate the value of said combination for each of one or more iterations between each of which the energy budget portion (E(i)) for each segment is reduced by a predetermined value relative to the previous iteration, until the value of the combination is less than or equal to the energy budget (E), and
    - determine the maximum electric power (Pmax(i)) of at least one segment, based on the product of the energy budget portion (E(i)) and the factor (Ki) chosen for the segment that provided the value of the combination less than or equal to the energy budget (E).

13. Computer program comprising instructions for implementing the method according to claim 12, when this program is executed by a processor.

FIG. 1

FIG. 2

**FIG. 3**

**FIG. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2012172227 A1